(19) Europäisches Patentamt
European Patent Office
Office européen des brevets

(11) **EP 3 017 298 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(21) Anmeldenummer: **14731245.8**

(22) Anmeldetag: **17.06.2014**

(51) Int Cl.:
*G01N 30/86* (2006.01)    *B01J 8/24* (2006.01)
*B01D 53/12* (2006.01)    *C01B 33/107* (2006.01)
*F23C 10/00* (2006.01)

(86) Internationale Anmeldenummer:
**PCT/EP2014/062676**

(87) Internationale Veröffentlichungsnummer:
**WO 2015/000696 (08.01.2015 Gazette 2015/01)**

(54) **ANALYSE DER ZUSAMMENSETZUNG EINES GASES ODER EINES GASSTROMES IN EINEM CHEMISCHEN REAKTOR UND EIN VERFAHREN ZUR HERSTELLUNG VON CHLORSILANEN IN EINEM WIRBELSCHICHTREAKTOR**

ANALYSIS OF THE COMPOSITION OF A GAS OR A GAS-STREAM IN A CHEMICAL REACTOR AND PROCESS FOR PRODUCING CHLOROSILANES IN A FLUIDIZED BED REACTOR.

ANALYSE DE LA COMPOSITION D'UN GAS OU D'UN FLUX GAZEUX DANS UN RÉACTEUR CHIMIQUE ET PROCÉDÉ POUR PRODUIRE DES CHLOROSILANES DANS UN RÉACTEUR À LIT FLUIDISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2013 DE 102013212908**

(43) Veröffentlichungstag der Anmeldung:
**11.05.2016 Patentblatt 2016/19**

(73) Patentinhaber: **Wacker Chemie AG**
**81737 München (DE)**

(72) Erfinder:
• **GOEBEL, Thorsten**
**84547 Emmerting (DE)**
• **HAECKL, Walter**
**84367 Zeilarn (DE)**
• **MUENZER, Wolfgang**
**84375 Kirchdorf (DE)**
• **PAETZOLD, Uwe**
**84489 Burghausen (DE)**
• **SOFINA, Natalia**
**84489 Burghausen (DE)**

(74) Vertreter: **Potten, Holger et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A2- 2 243 745        WO-A1-00/39078**
**WO-A1-02/44186          DE-A1-102004 014 220**
**DE-A1-102006 009 954    US-A- 4 044 109**
**US-A1- 2010 264 362**

**Beschreibung**

Gegenstand der Erfindung ist ein Verfahren gemäß Anspruch 1 zur Analyse der Zusammensetzung eines Gases oder eines Gasstromes, enthaltend $AlCl_3$, in einem Wirbelschichtreaktor, bei dem zugeführtes HCl mit Silicium reagiert, wodurch Chlorsilane hergestellt werden, umfassend Abtrennen von $AlCl_3$ aus dem Gas und anschließende Untersuchung der Zusammensetzung des Gases mittels Gaschromatographie oder Spektroskopie. Die Herstellung von Trichlorsilan (TCS) erfolgt durch Umsetzung von metallurgischem Silicium (mg-Si) mit HCl oder durch Umsetzung von mg-Si mit Siliciumtetrachlorid (STC) und Wasserstoff bzw. HCl. Methylchlorsilane werden durch Umsetzung von mg-Si mit Methylchlorid hergestellt.

US 4092446 A offenbart einen Reaktor, in dem ein Siliciumbett, bestehend aus Siliciumpartikeln, mit Chlorwasserstoff durchströmt wird. Der Chlorwasserstoff reagiert mit den Siliciumpartikeln zu Siliciumtetrachlorid (STC) und TCS und Wasserstoff.

Zur wirtschaftlichen Optimierung der Chlorsilan-Synthesen hinsichtlich der Ausbeuten der jeweiligen Zielprodukte hat die Analyse der gasförmigen Reaktionsprodukte eine hohe Bedeutung.

Beispielsweise führt die Reaktion von mg-Si mit HCl zu einem Produktspektrum mit dem Hauptprodukt TCS (> 80 %), Nebenprodukten wie STC (< 20 %) und Dichlorsilan (DCS) (< 2 %), sowie verschiedenen Spurenverunreinigungen. Weiterhin enthält das Reaktionsgas noch H2 und nicht umgesetzte HCl.

Meistens besteht das Ziel der TCS-Synthese in einer maximalen TCS-Ausbeute bei gleichzeitig möglichst vollständigem HCl-Umsatz, da die Rückgewinnung der HCl aus dem Reaktionsabgas zu zusätzlichen Kosten führt.

US 2012189526 A1 offenbart ein Verfahren zur Herstellung von Trichlorsilan, bei dem Siliziumpartikel mit Tetrachlorsilan und Wasserstoff und gegebenenfalls mit Chlorwasserstoff in einem Wirbelschichtreaktor zu einem trichlorsilanhaltigen Produktgasstrom umgesetzt, der Wirbelschichtreaktor mit mindestens einem Einlass für das Tetrachlorsilan und den Wasserstoff sowie gegebenenfalls den Chlorwasserstoff, mindestens einem Einlass für die Siliciumpartikel, die mit dem Tetrachlorsilan und dem Wasserstoff eine Wirbelschicht ausbilden, und mindestens einem Auslass für den trichlorsilanhaltigen Produktgasstrom, dem mindestens ein Partikelabscheider vorgeschaltet ist, der selektiv nur Siliciumpartikel bis hin zu einer bestimmten Maximalpartikelgröße passieren lässt, dadurch gekennzeichnet, dass in regelmäßigen Zeitabständen oder kontinuierlich über mindestens einen weiteren Auslass ohne einen solchen Partikelabscheider Siliciumpartikel aus dem Reaktor ausgeschleust werden.

In US 20110297884 A1 ist beschrieben, dass mehrere horizontal und vertikal im Reaktor eingebrachte Temperaturmessstellen geeignet sind, den zeitlichen Verlauf der Temperaturänderungen im Reaktor zu verfolgen.
Zur Steuerung des Reaktors wird jedoch nur eine dieser Temperaturmessstellen, welche am oberen Ende der Wirbelschicht liegt, herangezogen.
Als Steuergröße wird bei den gewählten Prozessbedingungen eine bestimmte Temperatur innerhalb bestimmter Grenzen als vorteilhaft erachtet.

Zur Steigerung der TCS-Ausbeute sind in der Literatur verschiedene Verfahren beschrieben.

Neben der Einhaltung bestimmter Reaktionsbedingungen, wie z.B. der Quenche des Reaktionsgases, kommen dabei häufig Katalysatoren zum Einsatz. Eine Erhöhung des HCl-Umsatzes lässt sich beispielsweise durch die Erhöhung der Temperatur und die Zugabe von Katalysatoren erzielen.

Dabei ist es problematisch, dass Maßnahmen zur Steigerung des HCl-Umsatzes häufig mit einer Reduzierung der TCS-Selektivität (z.B. Temperatursteigerung) oder umgekehrt (Quenche, verbesserte Kühlung) verbunden sind.

Deshalb ist es in der Praxis schwierig, gleichzeitig das Optimum der Reaktionsbedingungen für die TCS-Selektivität und den HCl-Umsatz einzustellen.

Auch einmal eingestellte optimale Betriebsbedingungen verändern sich im Laufe der Reaktionszeit. Im Verlauf der kontinuierlich betriebenen TCS-Synthese reichern sich im Reaktor Verunreinigungen und ggf. auch katalytisch aktive Bestandteile an, die sowohl die TCS-Selektivität als auch den HCl-Umsatz negativ beeinflussen.

Es ist deshalb notwendig, regelmäßig diese Verunreinigungen aus dem Reaktor zu entfernen. Auch dadurch werden Schwankungen in der TCS-Selektivität und im HCl-Umsatz induziert.

Bei der Umsetzung von metallurgischem Silicium (mg-Si) und HCl zu TCS (HSiCl3) entstehen Wasserstoff und Nebenprodukte

$$Si + 3\ HCl = HSiCl3 + H2 + Nebenprodukte \qquad (1)$$

Die Menge der entstehenden Nebenprodukte in der Reaktion (1) und damit die TCS-Selektivität, definiert als Molenbruch TCS/(TCS + Nebenprodukte), wird durch mehrere Faktoren beeinflusst, u.a. auch durch die katalytische Wirkung von Verunreinigungen (Begleitelementen) im eingesetzten mg-Si. Es ist bekannt, dass Verunreinigungen in mg-Si oder Zugabe von einem Katalysator zu mg-Si die Selektivität der Reaktion beeinflussen können. Einige Verunreinigungen haben einen positiven Einfluss, erhöhen also die Selektivität. Andere Verunreinigungen haben dagegen einen negativen Einfluss.

US 20090060818 A1 beansprucht ein Verfahren zur Herstellung von TCS durch Umsetzung von Silicium mit HCl, oder STC mit Wasserstoff in Gegenwart von Silicium und Katalysatoren. Als Katalysator werden z.B. Fe, Cu, Al, V, Sb oder ihre Verbindungen verwendet. Silicium und Katalysatoren werden vor der Reaktion miteinander laminiert und zerkleinert. Durch unmittelbaren Kontakt zwischen Silicium und Katalysator wird u.a. die Ausbeute von Nebenprodukten deutlich herabgesetzt, was die TCS-Selektivität erhöht.

US 5871705 A schlägt ein Verfahren zur Herstellung von TCS durch Umsetzung von Silicium mit Chlorwasserstoff vor, umfassend die Kontaktierung von mindestens einer Silanverbindung, ausgewählt aus der Gruppe bestehend aus Dichlorsilan (DCS), Monochlorsilan (MCS) und Monosilan, mit Silicium während oder vor der Reaktion zwischen Silicium und Chlorwasserstoff. Silicium wird also mit einer Silanverbindung kontaktiert, um die Oxidschicht auf der Silicium-Oberfläche zu entfernen und damit die Reaktivität gegenüber HCl zu steigern. Auch ist offenbart, die Reaktion zwischen dem Silicium und dem Chlorwasserstoff in Gegenwart eines Katalysators mit katalytischer Aktivität zur Herstellung von TCS aus Silicium und Chlorwasserstoff und einer Alkalimetallverbindung durchzuführen. Dies unterdrückt die Reaktion zu STC und erhöht damit die TCS-Selektivität.

WO 2006031120 A1 beschreibt ein Verfahren zur Herstellung von TCS durch Umsetzung von Si mit HCl-Gas bei einer Temperatur zwischen 250 und 1100 °C und einem Druck von 0,1-30 atm in einem Fließbettreaktor, in einem Rührbettreaktor oder in einem Festbettreaktor, dadurch gekennzeichnet, dass das an den Reaktor gelieferte Si weniger als 100 ppm Mn enthält. Der Einsatz von mg-Si mit mehr als 100 ppm Mn oder Zugabe von Mn in den Reaktor führt zur niedrigeren Reaktivität und TCS-Selektivität.

Zur Bestimmung der Ausbeuten der TCS-Synthese war es bisher üblich, die im Reaktorabgas enthaltenen Chlorsilane zu kondensieren und dann zu analysieren. Diese Art der offline-Analyse, z.B. Offline-Gaschromatographie (GC), benötigt relativ viel Zeit und ist wegen der unterschiedlichen Kondensierbarkeit der Probenbestandteile fehlerbehaftet. Außerdem lassen sich mit dieser Methodik die Anteile an $H_2$, $N_2$ und HCl nicht bestimmen.

WO 2010135105 A1 offenbart ein Verfahren zur Untersuchung von Gasen in einem Verfahren zur Herstellung von hochreinem Silicium, wobei ein Gas oder Gasgemisch enthaltend eines oder mehrere der Gase der Gruppe $H_2$, $SiH_4$, $H_3SiCl$, $HSiCl_3$, $H_2SiCl_2$, HCl, $SiCl_4$ und $N_2$, der Strahlung eines Raman-Spektrometers ausgesetzt wird, um für jedes der enthaltenden Gase ein Raman-Signal zu ermitteln und diese Signale zu untersuchen, um Vorhandensein und Konzentration eines jeden der vorhanden Gase zu bestimmen. Die Möglichkeit zur gleichzeitigen Messung von Chlorsilanen, sowie $H_2$, $N_2$ und HCl mittels Raman-Spektroskopie wird als vorteilhaft zum schnellen Eingreifen in die Prozesse zur Abscheidung von Polysilicium bzw. der Konvertierung von STC zu TCS angesehen.

WO 2011026670 A2 offenbart ein Verfahren zur Steuerung einer Anlage für die Herstellung von polykristallinem Silizium, wobei die Anlage mindestens einen Reaktor mit mindestens einer Zuleitung und einer Ableitung für ein Gasgemisch umfasst, gekennzeichnet durch die folgenden Schritte:

- dass aus der Zuleitung und der Ableitung eines jeden Reaktors Messproben entnommen werden;
- dass die entnommenen Messproben mindestens einem Gaschromatographen über jeweils eine Leitung zugeführt werden;
- dass an Hand der vom Gaschromatographen gewonnenen Messwerte hinsichtlich der Zusammensetzung der zugeführten Messproben Steuersignale gewonnen werden; und
- dass an Hand der gewonnenen Steuersignale mittels einer Steuer- und Regeleinheit über Stellelemente eine Vielzahl von Parametern des mindestens einen Reaktors derart eingestellt werden, dass die Effizienz der Anlage automatisch in ein Produktionsoptimum geführt wird.

Es hat sich gezeigt, dass die in WO 2010135105 A1 und in WO 2011026670 A2 beschriebenen Verfahren nachteilig sind, wenn damit Gasströme aus den Silansynthesen untersucht werden. Es wurde beobachtet, dass sich auf den Messzellen oder auf optischen Bauelementen Partikel ablagern. Eine Reinigung der Messeinrichtung konnte keine Abhilfe schaffen, da es sich offenbar um abrasive Partikel handelt, die die Bauelemente beschädigen können. Weiterhin wurde festgestellt, dass es zu Veränderungen im Untergrund der Spektren und zu einem kontinuierlichen Intensitätsverlust der Signale kommt, die die analytische Auswertung erschweren oder unmöglich machen. Bei der Gaschromatographie kam es zu Verblockungen in Leitungen und Ventilen sowie zu unerwünschten Reaktionen mit dem Trennmittel der Säule des Gaschromatographen.

DE 10 2004 014 220 A1 beschreibt ein Verfahren zur Abtrennung von $AlCl_3$ aus einem Organosilane enthaltendem Verbindungsgemisch mit einem $AlCl_3$-Gehalt von > 200 ppm, bezogen auf den Gehalt an Organochlorsilanen, bei dem das Verbindungsgemisch derart verdünnt wird, dass ein Produktstrom mit < 15% Feststoffen bei einer gleichzeitigen Konzentration < 25% an Komponenten mit einem Siedepunkt > 71°C bei 1013 hPa anfällt und dieser Produktstrom in einer Verdampfereinheit bei einer Temperatur < 165°C in flüchtige Verbindungen und $AlCl_3$-haltiger Feststoff aufgetrennt wird. Die Analytik der Organosilane erfolgt mittels Gaschromatographie.

WO 00/39078 A1 beschreibt Verfahren zur Herstellung von sulfuriertem Diphenyloxid, das eine Sulfurierungsstufe zur Umsetzung von Diphenyloxid mit elementarem Schwefel in Gegenwart eines festen Säurekatalysators umfasst. Bei dem Katalysator kann es sich um AlCl3 handeln.

WO 02/44186 A1 beschreibt ein Verfahren zur Direktsynthese von Organosilanen auf Basis von Siliciummetall. Im gasförmigen Produktstrom enthaltene flüchtige Metallsalze wie AlCl3 werden mit einem Aerosolabscheider aufgefangen. Die Untersuchung des Produktstroms erfolgt mit einem Gaschromatograph.

Die im Stand der Technik beobachteten Probleme wie Ablagerungen auf Bauelementen oder deren Beschädigung, Intensitätsverluste der Spektren, Verblockungen oder Reaktion mit Trennmittel, treten im erfindungsgemäßen Verfahren nicht auf.

Die Erfinder gehen davon aus, dass die Probleme im Stand der Technik durch Ablagerungen von AlCl3 und/oder Staubpartikeln verursacht werden. Die Resublimation von AlCl3 auf kälteren Stellen der Messeinrichtung (z.B. der optischen Bauelemente) führte zu einem kontinuierlichen Intensitätsverlust der Signale und zu weiteren Veränderungen im Raman-Spektrum, die eine zuverlässige Auswertung nicht mehr zuließen.

Aus der beschriebenen Problematik ergab sich die Aufgabenstellung der Erfindung.

Die Aufgabe wird gelöst durch ein Verfahren gemäß Anspruch 1 zur Analyse der Zusammensetzung eines Gases oder eines Gasstromes, enthaltend $AlCl_3$, in einem Wirbelschichtreaktor mit einer Reaktorhöhe $H_o$, bei dem zugeführtes HCl mit Silicium reagiert, wodurch Chlorsilane hergestellt werden, umfassend Abtrennen von $AlCl_3$ aus dem Gas und anschließende Untersuchung der Zusammensetzung des Gases mittels Gaschromatographie oder Spektroskopie, wobei aufgrund der Zusammensetzung des Gases ein Temperaturprofil im Reaktor gemäß Anspruch 1 in Abhängigkeit von der Reaktorhöhe $H_o$ verändert wird. Solche Gase oder Gasströme enthaltend AlCl3 entstehen insbesondere bei der Synthese von Chlor- bzw.

Organochlorsilanen, beispielsweise bei der Herstellung von Trichlorsilan (TCS) durch Umsetzung von mg-Si mit HCl, der Umsetzung von mg-Si mit Siliciumtetrachlorid (STC) und Wasserstoff bzw. HCl, sowie bei der Synthese von Methylchlorsilanen durch Umsetzung von mg-Si mit Methylchlorid. Insbesondere wird die Erfindung dadurch gekennzeichnet, dass das Temperaturprofil im Wirbelschichtreaktor größer ist als $S1(H/H0) = (a1-b1)*(1/(1+exp(-c1((H/H0)-d1))))+b1$ und kleiner ist als $S2(H/H0) = (a2-b2)*(1/(1+exp(-c2((H/H0)-d2))))+b2$, wobei $a1 = 100\ °C$, $a2 = 300\ °C$, $b1 = 300\ °C$, $b2 = 400\ °C$, $c1 = 50$, $c2 = 20$, $d1 = 0,2$, $d2 = 0,8$ ist.

Die Erfinder haben erstmals erkannt, dass das vertikale Temperaturprofil über die gesamte Reaktorhöhe, also auch der Temperaturverlauf im Gasraum oberhalb der Wirbelschicht, wichtig für die Prozessführung ist, während im Stand der Technik (vgl. US 20110297884 A1) nur eine von mehreren Temperaturmessstellen im Reaktor, nämlich die am oberen Ende der Wirbelschicht liegende, gesteuert wurde.

Vorzugsweise werden die durch ein Verfahren zur Analyse der Zusammensetzung eines Gases oder eines Gasstromes, enthaltend AlCl3, umfassend Abtrennen von AlCl3 aus dem Gas und anschließender Untersuchung des Gases mittels Gaschromatographie oder Spektroskopie, erhaltenen Daten zur Zusammensetzung des Gases oder Gastroms zur Einstellung des Temperaturprofils im Wirbelschichtreaktor verwendet.

Bei den genannten Verfahren zur Analyse der Zusammensetzung eines Gases oder eines Gasstromes kommt mg-Si als Ausgangsmaterial zum Einsatz. Kommerziell erhältliches mg-Si enthält bis zu mehreren 1000 ppmw Aluminium. Zumindest ein Teil des Aluminiums reagiert bei einer Temperatur von größer als 300 °C mit HCl bzw. Chlorsilanen zu AlCl3 ab. Da AlCl3 bei einer Temperatur von größer als 180 °C sublimiert, liegt es gasförmig im Reaktionsprodukt am Reaktorausgang vor.

Es ist vorgesehen, vor der Analyse der Zusammensetzung des Gases, AlCl3 aus dem Gas abzutrennen.

Vorzugsweise erfolgt die Abtrennung des AlCl3 durch Absorption an Natriumchlorid.

Durch Bildung eines Doppelsalzes (NaAlCl4) wird AlCl3 effizient aus dem Gasstrom abgetrennt, ohne die Zusammensetzung des Gasstromes weiter zu verändern.

Dabei lassen sich auch Feststoffpartikel im Gasstrom abtrennen.

Zur Analyse des Gasgemisches können in Kombination mit der Absorptionseinheit für AlCl3 die gängigen online-AnalyseVerfahren, wie GC, IR- und Raman-Spektroskopie, eingesetzt werden.

Besonders bevorzugt ist es, zur Analyse der Zusammensetzung Raman-Spektroskopie zu benutzen.

Vorzugsweise werden die aus dem Analyseverfahren erhaltenen Daten zur Steuerung von Reaktoren zur Herstellung von Chlor- bzw. Organochlorsilanen, vorzugsweise zur Steuerung eines Reaktors zur direkten Synthese von Trichlorsilan durch Umsetzung von metallurgischem Silicium mit HCl, verwendet.

Die Erfindung ermöglicht es, schnell und sicher die Zusammensetzung des Reaktionsabgases zu bestimmen und Reaktor- und Prozessparameter zu verändern, um das Reaktionsergebnis zu beeinflussen.

Vorzugsweise werden Reaktor- und Prozessparameter aufgrund der Gasanalysen so verändert, dass die Ausbeute des Reaktionsprodukts erhöht wird.

Vorzugsweise werden Reaktor- und Prozessparameter aufgrund der Gasanalysen so verändert, dass die Umsatzrate eines Edukts erhöht wird.

Vorzugsweise werden Reaktor- und Prozessparameter aufgrund der Gasanalysen so verändert, dass die Raum-Zeit-Ausbeute optimiert wird.

Vorzugsweise werden einer oder mehrere Reaktor- und Prozessparameter aufgrund der Gasanalysen verändert.

Besonders bevorzugt ist es, eine Form eines Temperaturprofils und Temperaturbereiche im Reaktor aufgrund der Gasanalysen festzulegen.

Besonders bevorzugt ist es, einen oder mehrere der Reaktor- und Prozessparameter direkt mit dem Raman-Spektrometer zu koppeln (Online-Analytik mit Prozesssteuerung).

Ebenso ist es bevorzugt, die Ausschleusung von Kontaktmasse derart mit Raman-Messungen zu kombinieren und aufgrund der Gasanalysen den zeitlichen Verlauf der Ausschleusung festzulegen bzw. zu steuern.

Die Gasanalyse kann Daten zu Selektivität, Reaktivität, HCl-Umsatz, DCS-Gehalt liefern und ermöglicht es, auf diese durch eine Prozessänderung unmittelbar Einfluss zu nehmen.

Im Folgenden werden bevorzugte Ausführungen der Erfindung erläutert.

**Raman-Spektrometer**

Das Laserlicht des Spektrometers wird über einen Lichtwellenleiter zur Raman-Sonde geführt und nach der Sonde fokussiert.

Im Brennpunkt werden messgasspezifische, inelastische Raman-Übergänge als Streulicht induziert.

In die Sonde ist eine Sammeloptik integriert die das Raman-Streulicht über einen weiteren Lichtwellenleiter zum Spektrometer führt.

Im Spektrometer wird das Raman-Streulicht von einem Gittermonochromator auf eine Flächen-Array-Kamera abgebildet. Die messgasspezifischen Raman-Übergänge werden abhängig vom Raman-Shift als Intensitäten in einem Spektrum dargestellt.

Der Gittermonochromator ist so ausgelegt, dass ein Raman-Shift von -21 cm-1 bis 4417,5 cm-1 im Spektrum abgebildet wird.

Einmal täglich wird eine Dunkelmessung durchgeführt. Als Ergebnis erhält man ein Dunkelspektrum das automatisch vom Raman-Spektrum subtrahiert wird, um das elektronische Rauschen der Kamera in den Spektraldaten zu eliminieren.

Für jede Messung werden Anregungen der Höhenstrahlung aus den Spektraldaten entfernt.

Die Rayleigh-Strahlung des Lasers wird mittels Notch-Filter sowohl in der Sonde als auch im Spektrometer minimiert.

Der Sondenabschnitt in dem der Notch-Filter sitzt, wird gekühlt.

Die Dauer eines Messzyklus wird von einer Prozess-Software an eine Kommunikations-Software übergeben, die im Spektrometer den Laser-Shutter für die vorgegebene Messzeit öffnet.

Die Auswertung der Spektraldaten erfolgt vorzugsweise wie folgt:

Nach Ablauf eines Messzyklus werden aus dem Raman-Spektrum messgasspezifische Raman-Übergänge ausgewertet.

Die inelastischen Übergänge liegen im Spektrum als Intensitäts-Peaks vor.

Sowohl die Höhe der Peaks als auch das Flächenintegral sind abhängig von der Anzahl der molekülspezifischen Übergangs-Rate bzw. der Konzentration einer Komponente im Messgas.

Das Flächenintegral wird für die in **Tabelle 1** angegebenen Signale berechnet.

Die Kalibrierung der erhaltenen Flächenintegrale erfolgt nach dem Fachmann geläufigen Verfahren.

**Tabelle 1**

| Komponente | Raman-Shift (cm-1) |
| --- | --- |
| TCS | 253 |
| H2 | 354 |
| Saphir | 416 |
| STC | 424 |
| TCS | 496 |
| TCS | 588 |
| Saphir | 748 |

(fortgesetzt)

| Komponente | Raman-Shift (cm-1) |
|---|---|
| TCS | 813 |
| DCS | 2248 |
| TCS | 2261 |
| N2 | 2329 |
| HCl | 2884 |
| H2 | 4127 |
| H2 | 4145 |
| H2 | 4157 |
| Saphir | 4367 |
| Saphir | 4397 |

Alternativ zur online-Analyse mittels Raman-Spektroskopie wurde ein online-GC mit vorgeschaltetem Salzfilter erfolgreich getestet.

Im Folgenden wird die Erfindung auch anhand von **Fig. 1** - **6** erläutert.

**Fig. 1** zeigt eine geeignete Vorrichtung zur Durchführung des Verfahrens.

**Fig. 2** zeigt die TCS-Konzentration im analysierten Gas in Abhängigkeit von der Zeit.

**Fig. 3** zeigt erfindungsgemäße, vertikale Temperaturprofile im Wirbelschichtreaktor.

**Fig. 4** die TCS-Konzentration im analysierten Gas in Abhängigkeit von der Zeit bei schwankendem Temperaturverlauf im oberen und unteren Bereich des Reaktors.

**Fig. 5** die TCS-Konzentration im analysierten Gas in Abhängigkeit von der Zeit bei weitgehend stabilem Temperaturverlauf im oberen und unteren Bereich des Reaktors.

**Fig. 6** zeigt die TCS-Konzentration im analysierten Gas in Abhängigkeit von der Zeit und die Wirkung einer Ausschleusung von Kontaktmasse.

**Liste der verwendeten Bezugszeichen**

**A**  Wirbelschichtreaktor
**B**  Partikelabscheider
**C**  Partikelfilter
**D**  Salzfilter
**E**  Messzelle für Raman-Spektrometer
**F**  Thermokette
**G**  Steuereinheit
**H**  Kühlstangen
**I**  Kühlmantel
**a**  Messsignale vom Reaktor (z. B. Drücke; Temperaturen)
**f**  Messsignale der Thermokette F
**1**  Siliciumzufuhr
**2**  HCl-Zufuhr
**3**  Produktgasleitung zum Partikelabscheider B
**4**  Produktgasleitung zum Filter C
**5**  Absperramatur zur Unterbrechung der Rückschleusung von Partikeln aus dem Partikelabscheider B

**6** Beheizte Bypassleitung zum Salzfilter D
**7** Beheizte Leitung zur Messzelle E
**8** Beheizte Rückführung des Messgases ins Produkt
**9** Produktgasleitung zur weiteren Behandlung

**Prozesssteuerung**

Zur automatischen Überwachung der Anlage ist es sinnvoll, ein Entnahmeelement für Messproben in der Ableitung eines jeden Reaktors der Anlage vorzusehen.

Zur Analyse der entnommenen Messprobe ist mindestens ein Raman-Spektrometer der Anlage zugeordnet.

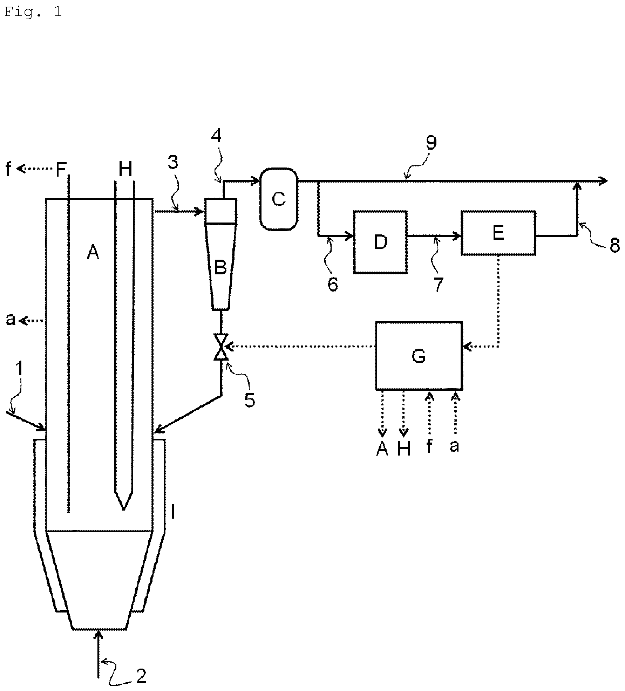

**Fig. 1** zeigt eine entsprechende Vorrichtung.

Die Messprobe wird idealerweise am Reaktorausgang entnommen, vorzugsweise nach dem Partikelabscheider B, besonders bevorzugt nach weiteren Partikelfiltern C.

Die Messprobe kann über eine beheizte Leitung 6 der Messeinheit E des Raman-Spektrometers zugeführt werden.

Die Messprobe kann über eine beheizte Leitung 6 einer zwischen geschalteten Einheit D zur Entfernung von AlCl3 aus dem chlorsilanhaltigen Abgasstrom zugeführt werden.

Von dort wird das AlCl3-freie Abgas vorzugsweise über eine beheizte Leitung 7 der Messeinheit E des Raman-Spektrometers zugeführt.

Es ist wirtschaftlich und daher besonders bevorzugt, das Messgas aus der Messzelle des Raman-Spektrometers an geeigneter Stelle wieder in den Prozess zurückzuführen (Leitung 8).

Es ist zweckmäßig die Leitungen 6, 7 und 8 auf bis zu 300°C aufzuheizen. Besonders bevorzugt sind 100 bis 250°C.

Es ist vorteilhaft, die Durchflussmenge und den Druck in Leitung 6 zu regulieren.

Es ist auch sinnvoll, Leitung 8 mit einer Rückströmsicherung auszustatten.

Die Messeinheit E umfasst ein Gehäuse mit einer Messzelle des Raman-Spektrometers sowie weiteren Partikelfiltern.

Das Gehäuseinnere, sowie die darin befindlichen Armaturen können auf bis zu 200°C aufgeheizt werden. Besonders bevorzugt sind Temperaturen zwischen 100 und 150°C.

Die Messzelle umfasst idealerweise einen massiven Edelstahlblock, welcher mit einer eigenen Heizung ausgestattet ist.

In jene Messzelle wird die Messsonde eingebracht. Das Messgas wird durch die Messzelle geleitet. Druck und Temperatur des zu analysierenden Gases werden in der Messzelle erfasst.

Einheit D umfasst vorzugsweise einen Behälter, der festes Natriumchlorid in einer lockeren Schüttung enthält, und welcher auf bis zu 250°C aufgeheizt werden kann.

Das AlCl3-haltige Abgas des Reaktors durchströmt die Schüttung aus NaCl, wobei sich das AlCl3 im NaCl löst und somit effektiv aus dem Abgas entfernt wird.

Die Verbindung aus AlCl3 und NaCl ist bei den gewählten Temperaturbedingungen flüssig und kann in einem Auffangbehälter unterhalb des Behältnisses aufgefangen und entfernt werden.

Die Abtrennung ist sehr effektiv, da in nachgelagerten Systemen keinerlei Abscheidung von AlCl3 beobachtet werden konnte. Steuereinheit G sammelt Informationen und nutzt diese zur Steuerung der Absperramatur 5, der Kühlleistung von I, der Kühlleistung von H, weiteren Parametern an A, der Siliciumzufuhr 1, und der HCl-Zudosierung 2.

**Beispiel 1**

In diesem Beispiel wird das erfindungsgemäße Verfahren einer herkömmlichen wöchentlichen Analyse mittels Offline-GC gegenübergestellt.

Die Analyse des Messgases wurde mit einem Raman-Spektrometer durchgeführt.

Es wurde ein Laser mit einer Wellenlänge von 532 nm und einer Leistung von 150 mW verwendet.

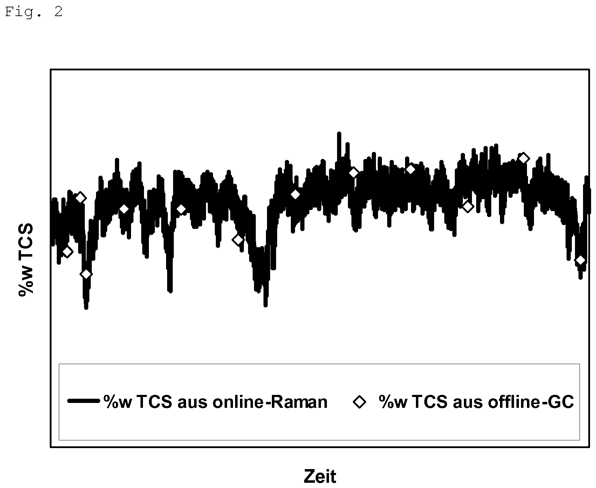

**Fig. 2** zeigt die Ergebnisse. Es wurde jeweils die Konzentration von TCS im Messgas bestimmt. Die Vorteile der Online-Analytik sind evident.

**Beispiel 2**

Durch eine vertikal in den Reaktor eingebrachte Thermokette mit Temperaturfühlern kann ein Temperaturprofil bestimmt werden.

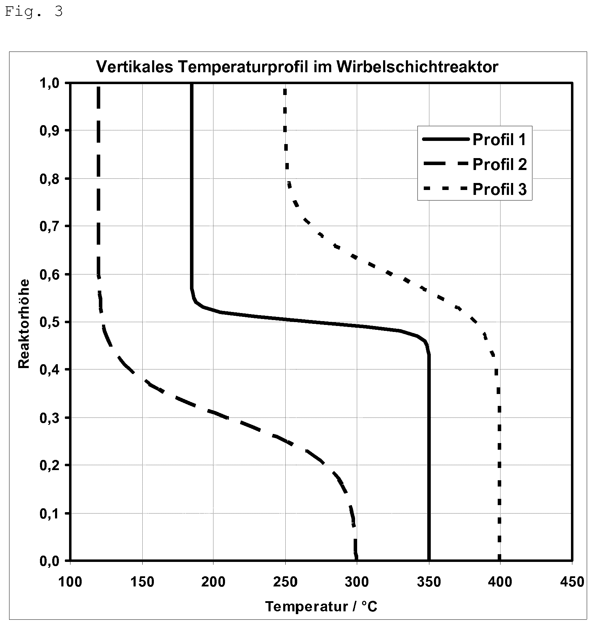

**Fig. 3** zeigt Beispiele erfindungsgemäßer, vertikaler Temperaturprofile im Wirbelschichtreaktor.

Auf der Ordinate ist die Reaktorhöhe (normiert), auf der Abszisse die Temperatur aufgetragen.

Bevorzugt ist die Form einer S-Kurve (Sigmoidkurve):

$$S(H/H0) = (a-b)*(1/(1+\exp(-c((H/H0)-d))))+b$$

Mit einer auf 1 normierten Reaktorhöhe lässt sich ein beliebiges Temperaturprofil über vier Variablen (Tmin, Tmax, Wendepunkt und Steilheit) eindeutig beschreiben.
$a = T(\min)$, $b = T(\max)$, $c$ = Steilheit, $d$ = Wendepunkt
Bevorzugte Bereiche von a, b, c und d:

120 < a < 250 °C, 300 < b < 400 °C, 20 < c < 100, 0,2 < d < 0,8.

Besonders bevorzugte Bereiche von a, b, c und d:

200 < a < 250 °C, 330 < b < 380 °C, 20 < c < 50, 0,3 < d < 0,6.

Im Rahmen der Erfindung wird das Raman-Signal genutzt, um die Selektivität durch Einstellen des Temperaturprofils zu variieren.
Das jeweils günstigste Temperaturprofil hängt von weiteren Parametern ab und ist daher für eine bestimmte Selektivität nicht zwingend gleich.
Es ist zu berücksichtigen, dass weitere Parameter wie z.B. Differenzdruck, HCl-Menge, Zusammensetzung der Kontaktmasse, Korngrößenverteilung oder Kombinationen dieser Parameter einen Einfluss haben.
Die Zusammensetzung der Kontaktmasse und die jeweilige Korngrößenverteilung zu einem gegebenen Zeitpunkt ist unbekannt, hierfür existiert keine geeignete online-Analytik.
Daher ist eine Überprüfung mittels Online-Raman zwingend nötig, um die Änderungen direkt verfolgen zu können.
Wie wird auf das Temperaturprofil eingewirkt:

Wie in DE 2704975 A1 beschrieben, ist es zweckmäßig, sowohl eine Mantelkühlung als auch eine Kühlung der Wirbelschicht durch eingebrachte Kühllanzen vorzuhalten.

Die Einstellung des Temperaturprofils kann durch Regelung von Mantelkühlung und Stangenkühlung erfolgen, beispielsweise durch Anpassen der Kühlmittelmengen und/oder der Temperatur des Kühlmediums.
Vorzugsweise Unterteilung des Kühlmantels in mindestens zwei Sektionen, welche gezielt geregelt werden können.
Unterschiedliche Längen von Kühlstangen (mindestens zwei unterschiedliche Längen) mit vorzugsweise gezielter Ansteuerung der Kühlmittelmengen und/oder der Temperatur des Kühlmediums, um Temperaturen in bestimmten Höhen gezielt einstellen zu können.
Das Temperaturprofil kann weiterhin noch durch die Höhe der Wirbelschicht beeinflusst werden.
Das Temperaturprofil kann durch Variation der HCl-Zufuhr beeinflusst werden. Dies betrifft sowohl die HCl-Menge als auch den Ort der Einspeisung.
Das Temperaturprofil kann durch Variation der Strömungsgeschwindigkeit im Reaktor beeinflusst werden.
Das Temperaturprofil kann durch Änderung der Korngröße/ der Korngrößenverteilung verändert werden.

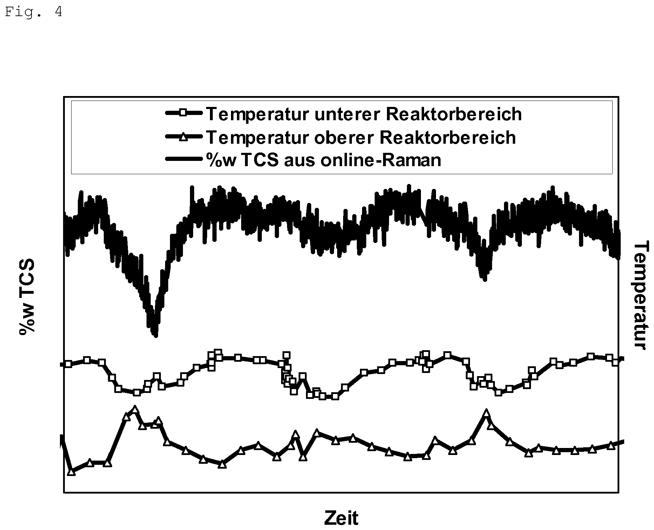

**Fig. 4** zeigt Temperaturverläufe in unterschiedlichen Höhen im Reaktor sowie den TCS-Gehalt aus Raman-Daten.
Daraus wird ersichtlich, dass eine Änderung der Temperatur einen direkten Einfluss auf die Selektivität hat.
Die Temperatur wird über die Reaktorhöhe geregelt.
Damit lässt sich durch eine Steuerung der Temperatur in unterschiedlichen Höhen die Reaktionszone beeinflussen.

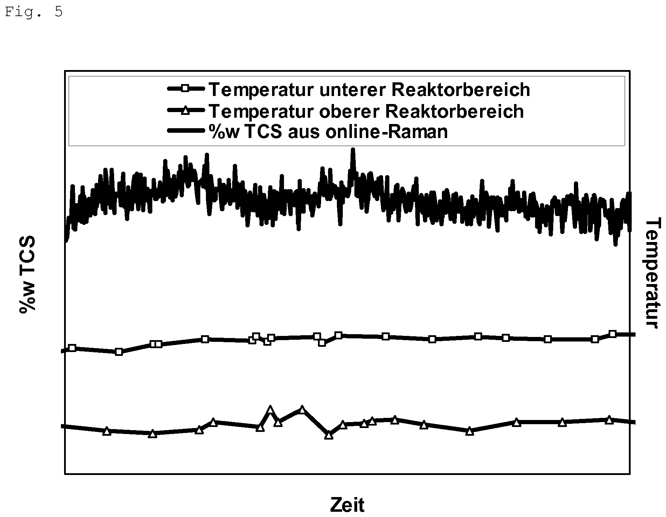

**Fig. 5** zeigt Temperaturverläufe in unterschiedlichen Höhen im Reaktor sowie den TCS-Gehalt aus Raman-Daten.
Es wird deutlich, dass eine Stabilisierung der Temperatur zu einer Stabilisierung der Selektivität führt.

**Beispiel 3**

Es ist bekannt, dass durch die im Wirbelschichtreaktor vorherrschenden Strömungsgeschwindigkeiten Partikel aus der Wirbelschicht mit dem Produktgasstrom mitgerissen werden und somit verloren gehen.

Wirbelschichtreaktoren sind deshalb üblicherweise mit Partikelabscheidern ausgestattet, welche unverbrauchtes Material wieder in den Reaktor führen. Die Partikelabscheider können im Reaktor und auch außerhalb angebracht sein.

Je nach technischer Auslegung trennen die Partikelabscheider Partikel bestimmter Größen ab, so dass diese dem Reaktor wieder zugeführt werden können. Kleinere Partikel passieren den Partikelabscheider und müssen z.B. durch Filter aus dem Produktgasstrom abgetrennt werden.

Bei der Umsetzung von metallurgischem Silicium mit Chlorwasserstoff kommt es über die Zeit zu einer Anreicherung von Schwermetallen in Form ihrer Chloride und weniger reaktivem Material im Reaktor. Gleichzeitig verändert sich durch die chemische Reaktion die Partikelgrößenverteilung des eingebrachten Materials. Eine zu starke Anreicherung von Schwermetallen und weniger reaktivem Material kann zu einer Beeinflussung der Reaktivität und der Selektivität führen und ist deshalb aus wirtschaftlicher Sicht unerwünscht.

Deshalb kann es von Zeit zu Zeit nötig sein, solches Material (so genannte Kontaktmasse) aus dem Wirbelschichtreaktor zu entfernen. Ein zeitnahes Eingreifen ist mangels einer adäquaten online-Analytik der chemischen Zusammensetzung des Reaktorinhaltes und der Partikelgrößenverteilung jedoch nicht möglich.

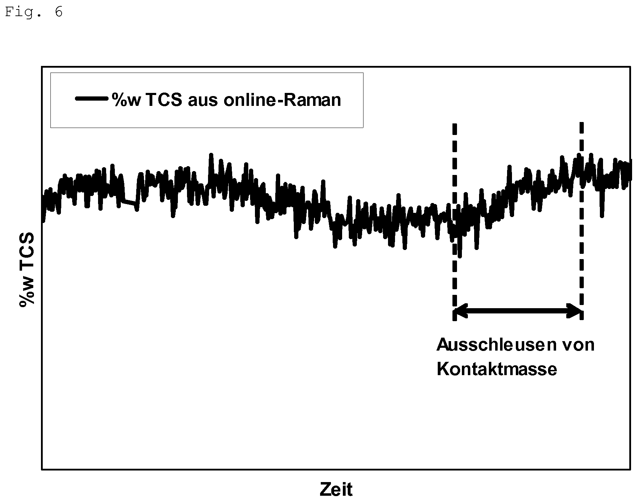

**Fig. 6** zeigt den zeitlichen Verlauf des TSC-Gehalt aus Raman-daten. Der Zeitpunkt, zu dem begonnen wurde, Kontaktmasse auszuschleusen, ist dargestellt.

Es zeigt sich, dass die Ausschleusung von Kontaktmasse zu einer Erhöhung der Selektivität führt.

Die Ausschleusung kann beispielsweise durch einen separaten Auslass erfolgen, wie z.B. in US 2012189526 A1 beschrieben. Nachteilig bei diesem Verfahren ist jedoch, dass hierdurch nicht zwischen "gutem" und "schlechtem" Material unterschieden wird, so dass das Material zweckmäßig einem weiteren Aufarbeitungsschritt unterzogen wird, um Siliciumverluste zu minimieren.

Da sich bei der chemischen Reaktion des metallurgischen Siliciums mit HCl die Schwermetalle vornehmlich als Chloride an der Oberfläche der Si-Partikel bilden, reichern sich diese durch ständige Schleifvorgänge der Siliciumpartikel untereinander bevorzugt an kleineren Partikeln an oder bilden selbst feinste Partikel, welche bei Unterschreitung einer bestimmten Größe den Partikelabscheider passieren können und somit nicht mehr in den Reaktor rückgeschleust werden.

Denkbar wäre daher, den Partikelabscheider so auf eine bestimmte Partikelgröße zu optimieren, dass möglichst viele stark verunreinigte Partikel den Reaktor verlassen, gleichzeitig jedoch möglichst viel unverbrauchtes Material wieder in den Reaktor rückgeschleust wird.

Da im großtechnischen Maßstab jedoch in der Regel Materialien verschiedener Hersteller mit unterschiedlichen Gehalten an Verunreinigungen eingesetzt werden, kann die oben beschriebene "optimale" Partikelgröße variieren.

Zweckmäßig ist es daher, den Partikelabscheider für eine bestimmte Korngrößenfraktion zu optimieren und bei Auftreten unerwünschter Effekte verstärkt auch weitere Partikel auszuschleusen, welche im Normalfall zurückgeführt würden.

Die Online-Überwachung beispielsweise der Selektivität und des HCl-Schlupfes führt zu zielgerichteten und ereignisbasierten Ausschleusezeiten und der Dauer der Ausschleusung, um Verluste an "gutem" Material zu minimieren.

**Patentansprüche**

**1.** Verfahren zur Analyse der Zusammensetzung eines Gases oder eines Gasstromes, enthaltend AlCl$_3$, in einem Wirbelschichtreaktor (A) mit einer Reaktorhöhe *H0*, bei dem zugeführtes HCl mit Silicium reagiert, wodurch Chlorsilane hergestellt werden, umfassend Abtrennen von AlCl$_3$ aus dem Gas und anschließende Untersuchung der Zusammensetzung des Gases mittels Gaschromatographie oder Spektroskopie, **dadurch gekennzeichnet, dass** aufgrund der Zusammensetzung des Gases ein Temperaturprofil im Reaktor (A) in Abhängigkeit von der Reaktorhöhe *H0* verändert wird, wobei das Temperaturprofil im Wirbelschichtreaktor größer ist als $S1(H/H0) = (a1-b1)*(1/(1+exp(-c1((H/H0)-d1))))+b1$ und kleiner ist als $S2(H/H0) = (a2-b2)*(1/(1+exp(-c2((H/H0)-d2))))+b2$, wobei *a1* = 100 °C, *a2* = 300 °C, *b1* = 300 °C, *b2* = 400 °C, *c1* = 50, c2 = 20, *d1* = 0,2, *d2* = 0,8 ist.

**2.** Verfahren nach Anspruch 1, wobei es sich um ein Gas oder um einen Gasstrom handelt, der bei einem chemischen Prozess unter Einsatz von metallurgischem Silicium entsteht.

**3.** Verfahren nach einem der Ansprüche 1 bis 2, wobei die Abtrennung des AlCl$_3$ durch Absorption an Natriumchlorid erfolgt.

**4.** Verfahren nach einem der Ansprüche 1 bis 3, wobei neben AlCl$_3$ auch Feststoffpartikel abgetrennt werden.

**5.** Verfahren nach einem der Ansprüche 1 bis 4, wobei die Untersuchung des Gases mittels Raman-Spektroskopie, Gaschromatographie oder IR-Spektroskopie erfolgt.

**6.** Verfahren nach einem der Ansprüche 1 bis 5, wobei die Konzentrationen von HCl, N$_2$, H$_2$, Chlorsilane und Organochlorsilane im Gas bestimmt werden.

**7.** Verfahren nach einem der Ansprüche 1 bis 6, wobei nach Untersuchung des Gases die dabei erhaltenen Daten zur Steuerung des chemischen Reaktors verwendet werden.

**8.** Verfahren nach Anspruch 7, wobei ein Wirbelschichtreaktor (A) gesteuert wird, in dem TCS durch Umsetzung von metallurgischem Silicium mit HCl hergestellt wird.

**9.** Verfahren nach Anspruch 8, wobei aufgrund der Untersuchung des Gases einer oder mehrere Reaktor- oder Prozessparameter derart geändert werden, dass eine oder mehrere Größen ausgewählt aus der Gruppe bestehend aus Ausbeute, TCS-Selektivität, HCl-Umsatzrate, Raum-Zeit-Ausbeute optimiert werden.

**10.** Verfahren nach einem der Ansprüche 1 bis 9, wobei aufgrund der Untersuchung des Gases ein Ausschleusen von Kontaktmasse zeitlich gesteuert wird.


**Claims**

**1.** Method for analyzing the composition of a gas or gas stream comprising AlCl$_3$ in a fluidized bed reactor (A) having a reactor height *H0*, in which supplied HCl reacts with silicon, with chlorosilanes being prepared as a result, comprising removal of AlC$_3$ from the gas and subsequent analysis of the composition of the gas by means of gas chromatography or spectroscopy, **characterized in that** the composition of the gas is used as a basis for modifying a temperature profile in the reactor (A) as a function of the reactor height *H0,* wherein the temperature profile in the fluidized bed reactor is greater than $S1(H/H0) = (a1-b1)*(1/(1+\exp(-c1((H/H0)-d1))))+b1$ and less than $S2(H/H0) = (a2-b2)*(1/(1+\exp(-c2((H/H0)-d2))))+b2$, where $a1 = 100\,°C$, $a2 = 300\,°C$, $b1 = 300\,°C$, $b2 = 400\,°C$, $c1 = 50$, $c2 = 20$, $d1 = 0.2$, $d2 = 0.8$.

**2.** Method according to Claim 1, the gas or gas stream being one produced in a chemical operation using metallurgical silicon.

**3.** Method according to either of Claims 1 and 2, the removal of the AlCl$_3$ being accomplished by absorption on sodium chloride.

**4.** Method according to any of Claims 1 to 3, particulate solids being removed as well as AlCl$_3$,

**5.** Method according to any of Claims 1 to 4, the gas being analyzed by means of Raman spectroscopy, gas chromatography or IR spectroscopy.

**6.** Method according to any of Claims 1 to 5, determinations being made of the concentrations of HCl, N$_2$, H$_2$, chlorosilanes and organochlorosilanes in the gas.

**7.** Method according to any of Claims 1 to 6, the data obtained on analysis of the gas being subsequently used to control the chemical reactor.

**8.** Method according to Claim 7, the reactor controlled being a fluidized bed reactor (A) in which TCS is prepared by reaction of metallurgical silicon with HCl.

**9.** Method according to Claim 8, the analysis of the gas forming the basis for changing one or more reactor parameters or operating parameters so as to optimize one or more variables selected from the group consisting of yield, TCS selectivity, HCl conversion rate, and space-time yield.

**10.** Method according to any of Claims 1 to 9, the analysis of the gas serving as a basis for time control of discharge of catalyst material.

**Revendications**

1. Procédé d'analyse de la composition d'un gaz ou d'un courant gazeux, contenant AlCl$_3$, dans un réacteur à lit fluidisé (A) ayant une hauteur de réacteur *H0,* selon lequel de l'HCl introduit réagit avec du silicium, des chlorosilanes étant ainsi formés, comprenant la séparation d'AlCl$_3$ du gaz, puis l'analyse de la composition du gaz par chromatographie gazeuse ou spectroscopie, **caractérisé en ce qu'**en raison de la composition du gaz, un profil de température dans le réacteur (A) est modifié en fonction de la hauteur du réacteur *H0,* le profil de température dans le réacteur à lit fluidisé étant supérieur à *S1(H/H0) - (a1-b1)\*(1/(1+exp(-c1((H/H0)-d1))))+b1* et inférieur à *S2(H/H0) = (a2-b2)\*(1/(1+exp(-c2((H/H0)-d2))))+b2,* avec a1 = 100 °C, a2 = 300 °C, b1 = 300 °C, b2 = 400 °C, c1 = 50, c2 = 20, d1 = 0,2, d2 = 0,8.

2. Procédé selon la revendication 1, dans lequel il s'agit d'un gaz ou d'un courant gazeux qui se forme lors d'un procédé chimique utilisant du silicium métallurgique.

3. Procédé selon l'une quelconque des revendications 1 à 2, dans lequel la séparation d'AlCl$_3$ a lieu par absorption sur du chlorure de sodium.

4. Procédé selon l'une quelconque des revendications 1 à 3, dans lequel des particules solides sont également séparées en plus d'AlCl$_3$.

5. Procédé selon l'une quelconque des revendications 1 à 4, dans lequel l'analyse du gaz a lieu par spectroscopie Raman, chromatographie gazeuse ou spectroscopie IR.

6. Procédé selon l'une quelconque des revendications 1 à 5, dans lequel les concentrations d'HCl, de N$_2$, d'H$_2$, des chlorosilanes et des organochlorosilanes sont déterminées dans le gaz.

7. Procédé selon l'une quelconque des revendications 1 à 6, dans lequel, après l'analyse du gaz, les données ainsi obtenues sont utilisées pour la commande du réacteur chimique.

8. Procédé selon la revendication 7, dans lequel un réacteur à lit fluidisé (A) est commandé, dans lequel du TCS est fabriqué par mise en réaction de silicium métallurgique avec HCl.

9. Procédé selon la revendication 8, dans lequel, en raison de l'analyse du gaz, un ou plusieurs paramètres du réacteur ou du procédé sont modifiés de manière à optimiser une ou plusieurs grandeurs choisies dans le groupe constitué par le rendement, la sélectivité pour le TCS, le taux de conversion d'HCl, le rendement espace-temps.

10. Procédé selon l'une quelconque des revendications 1 à 9, dans lequel, en raison de l'analyse du gaz, une évacuation de masse de contact est commandée dans le temps.

Fig. 1

Fig. 2

%w TCS

—— %w TCS aus online-Raman   ◇  %w TCS aus offline-GC

Zeit

Fig. 3

**Vertikales Temperaturprofil im Wirbelschichtreaktor**

Legend:
- Profil 1
- Profil 2
- Profil 3

Y-axis: Reaktorhöhe (0,0 – 1,0)
X-axis: Temperatur / °C (100 – 450)

Fig. 4

Fig. 5

Temperatur unterer Reaktorbereich
Temperatur oberer Reaktorbereich
%w TCS aus online-Raman

%w TCS

Temperatur

Zeit

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4092446 A
- US 2012189526 A1
- US 20110297884 A1
- US 20090060818 A1
- US 5871705 A
- WO 2006031120 A1
- WO 2010135105 A1
- WO 2011026670 A2
- DE 102004014220 A1
- WO 0039078 A1
- WO 0244186 A1
- DE 2704975 A1